(19) Europäisches Patentamt

European Patent Office

Office européen des brevets

(11) Publication number: **0 489 441 B1**

# EUROPEAN PATENT SPECIFICATION

(45) Date of publication of patent specification: **29.03.95**    (51) Int. Cl.[6]: **C01B 33/107**

(21) Application number: **91120923.7**

(22) Date of filing: **05.12.91**

The file contains technical information submitted after the application was filed and not included in this specification

(54) **Metal catalyzed production of tetrachlorosilane.**

(30) Priority: **06.12.90 US 622913**
         **12.12.90 US 627803**

(43) Date of publication of application:
**10.06.92 Bulletin 92/24**

(45) Publication of the grant of the patent:
**29.03.95 Bulletin 95/13**

(84) Designated Contracting States:
**DE FR GB**

(56) References cited:
**DE-A- 2 623 290**

**ONLINE DATABASE CA, STN International, ACCESSION NO. 95-171 975 & SU-833 494**

**ONLINE DATABASE CA, STN International, ACCESSION NO. 91-123 868 & JP-A-54-59 230**

(73) Proprietor: **DOW CORNING CORPORATION**
**P.O. Box 1767**
**Midland**
**Michigan 48686-0994 (US)**

(72) Inventor: **Halm, Roland Lee**
**507 Brentwood Drive**
**Madison,**
**Indiana (US)**
Inventor: **Naasz, Brian Michael**
**3210 Lakeshore Boulevard**
**LaGrange,**
**Kentucky (US)**
Inventor: **Zapp, Regie Harold**
**P. O. Box 144**
**Carrollton,**
**Kentucky (US)**

(74) Representative: **Spott, Gottfried, Dr. et al**
**Spott, Weinmiller & Partner**
**Sendlinger-Tor-Platz 11**
**D-80336 München (DE)**

**Description**

The present invention is a process for the production of silanes from the reaction of hydrogen chloride with silicon. The silicon may be in the form of silicon metal or a silicon containing material. The process employs a catalyst, selected from a group of metal and metal compounds, optionally on a solid support, which increases production of tetrachlorosilane.

Chemical Abstracts 95 (20), No. 171975n, referring to SU-A 79-2 794 636, teaches a process for the production of trichlorosilane and tetrachlorosilane wherein a Si-Cu mass is heated with HCl in a fluidized bed and wherein the yield of tetrachlorosilane is improved by feeding HCl in pulses.

The present invention is a process for the production of silanes from the contact of hydrogen chloride with silicon. The silicon may be in the form of silicon metal or a silicon containing material. The described process employs a catalyst which increases the yield of tetrachlorosilane. The catalyst is selected from a group consisting of tin and tin compounds, nickel and nickel compounds, arsenic and arsenic compounds, palladium and palladium compounds and mixtures thereof;, rhodium and rhodium compounds, platinum and platinum compounds, iridium and iridium compounds, and aluminum and aluminum compounds on a solid support. The process is run at a temperature of about 250 ° C. to 500 ° C.

The present invention is a catalyzed process for preparing silanes of formula $H_nSiCl_{4-n}$, where n is an integer from zero to four. The described process is especially useful for the production of tetrachlorosilane. The process comprises contacting silicon with hydrogen chloride in the presence of an effective concentration of a catalyst at a temperature of about 250 ° C. to 500 ° C.

The described process can be used to prepare silane ($SiH_4$), chlorosilane, dichlorosilane, trichlorosilane and tetrachlorosilane. However, the catalysts described herein preferentially select for the production of tetrachlorosilane. Therefore, tetrachlorosilane is a preferred product of the process.

The silicon can be in the form of silicon metal or a silicon containing material. The term "silicon metal" refers to a metalloid type material consisting essentially of elemental silicon. The term "silicon containing material" refers to alloys or intermetallic compounds of elemental silicon with, for example, iron copper or carbon. Preferred are alloys and intermetallic compounds comprising greater than about 50 percent by weight of elemental silicon.

The silicon is contacted with hydrogen chloride in the presence of an effective concentration of a catalyst. The surface area of the silicon is important in determining the rate of reaction of silicon with hydrogen chloride. Therefore, the silicon should be finely divided or powdered. The silicon can be, for example, ground or atomized silicon. It is preferred that the particle size of the silicon be less than 100 mesh. Larger particle sizes of silicon may be used, but the conversion rate to product silanes may be reduced. The lower limit of the silicon particle size is determined by the ability to produce and handle the silicon.

The described process employs an effective concentration of a catalyst. By "effective concentration," it is meant a concentration of catalyst which increases the yield of the process for the production of tetrachlorosilane over the yield obtained in the absence of a catalyst. Preferred are those catalyst which increase the yield of tetrachlorosilane by at least 10 percent over yields obtained in the uncatalyzed process. The term "yield" refers to the absolute amount of tetrachlorosilane produced.

Useful catalysts, for the described process, comprise those selected from the group consisting of tin and tin compounds, nickel and nickel compounds, arsenic and arsenic compounds, palladium and palladium compounds and mixtures thereof. When the catalyst is selected from a group consisting of tin and tin compounds, nickel and nickel compounds and arsenic and arsenic compounds an effective catalyst concentration is about 250 to 4,000 parts per million (ppm) of combined silicon and catalyst. Higher catalyst concentrations may be used, but to no perceived advantage. When the catalyst is selected from a group consisting of palladium and palladium compounds an effective catalyst concentration is about 600 to 4000 ppm of combined silicon and catalyst. All catalyst concentrations are expressed as the concentration of catalytic metal contacted with the silicon.

The metal catalyst compounds can be organic or inorganic compounds. Preferred are inorganic metal catalyst compounds. The inorganic metal catalyst compounds can be, for example, halide or oxide compounds of tin, nickel, arsenic or palladium. The inorganic compounds can be, for example, $NiBr_2$, $NiCl_2$, $AsBr_3$, $As_2O_5$, $SnCl_4$, $SnO_2$, $PdBr_2$, $PdCl_2$ or PdO. The preferred catalysts are tin and tin compounds. The most preferred catalyst is tin metal.

For the catalyst to be effective in the described process, the catalyst must have high interfacial contact with the silicon. Standard methods for establishing contact between reactants and a catalyst may be employed for this purpose. The catalyst may be, for example, in the form of a powder which is mechanically mixed with the silicon. The catalyst may be, for example, an alloy with the silicon.

Useful catalysts for the described process comprise metals and metal compounds bound to a solid support. Metals and metal compounds useful in the described process are, for example, palladium and palladium compounds, rhodium and rhodium compounds, platinum and platinum compounds, iridium and iridium compounds, tin and tin compounds, nickel and nickel compounds and aluminum and aluminum compounds.

The supported metal compounds can be, for example, inorganic oxide and halide compounds of the described metals. The inorganic metal compounds can be, for example, $PdBr_2$, $PdCl_2$, $PdO$, $RhCl_3$, $RhO_2$, $Rh_2O_3$, $PtF_4$, $PtF_6$, $PtO_2$, $IrBr_3$, $IrCl_3$, $IrO_2$, $SnCl_4$, $SnO_2$, $NiBr_2$, $NiCl_2$, $Al_2O_3$, $AlCl_3$ and $AlF_3$.

The preferred supported metals and metal compounds are selected from the group consisting of palladium and palladium compounds, rhodium and rhodium compounds, platinum and platinum compounds and iridium and iridium compounds. The most preferred supported metal is palladium.

The solid support for the metal or metal compound can be any particulate material which is stable under the process conditions, is not detrimental to the reaction and to which the metal or metal compound can be bound. The solid support material can be, for example, carbon, activated carbon, graphite, alumina, silica-alumina, diatomaceous earth or silica. The preferred solid support materials are activated carbon and alumina. Activated carbon is the most preferred support material. The physical form of the support material is that of a particulate powder. The available surface area of the solid support must be adequate to bind the desired level of catalyst. It is preferred that the solid support material have an intrinsic surface area within the range of 10 to 1500 $m^2/g$.

The method of binding of the metal or metal compound to the solid support is not considered critical to the described process. Any method of binding which retains the metal or metal compound in contact with the solid support under the process conditions is acceptable. In general, it has been found that the higher the level of metal or metal compound bound to the solid support, the more efficient the catalyst. Therefore, less total catalyst is required in the process for the same level of catalytic activity. A useful weight of metal or metal compound bound to solid support is within the range of 0.5 to 15 weight percent of the combined metal or metal compound and solid support material. A preferred weight of metal or metal compound bound to solid support is one to ten weight percent of the combined metal or metal compound and solid support material.

The effective concentration of catalyst depends upon the amount and type of metal or metal compound bound to the solid support material, as well as the type of solid support material. In general, metal concentration, either as elemental metal or in the form of a metal compound, in the range of 25 to 4000 parts per million (ppm) metal, based on total initial weight of solids charged to the reactor, have been found useful. The initial weight of solids charged to the reactor include the weights of silicon, solid support material and metal or metal compound. A preferred concentration for supported metal is about 100 to 2000 ppm.

Contact of the silicon and catalyst mixture with hydrogen chloride may be effected in standard type reactors for contacting solid and gaseous reactants. The reactor may be, for example, a fixed-bed reactor, a stirred-bed reactor or a fluidized-bed reactor. It is preferred that the reactor, containing the silicon and catalyst mixture, be purged with an inert gas, such as nitrogen or argon, prior to introduction of the hydrogen chloride. This purging is to remove oxygen and prevent oxidation of silicon and formation of other detrimental oxygenates.

The required contact time for the hydrogen chloride to react with the silicon will depend upon such factors as the temperature at which the reaction is run and the type and concentration of catalyst employed. In general, contact times in the range of 0.1 to 100 seconds have been found useful.

The described process can be run at a temperature of about 250°C. to 500°C. However, a preferred temperature for running the process is about 270°C. to 400°C.

Recovery of the product silanes can be by standard means, for example, by condensation.

Examples

The ability of selected metals, metal compounds and support materials to catalyze the reaction of hydrogen chloride with silicon to form tetrachlorosilane was evaluated in a series of test runs. The process was conducted in a fluidized-bed reactor of conventional design, similar to that described by Dotson U.S. Patent No. 3,133,109, issued May 12, 1964. For each test run, a mixture of ground metallurgical grade silicon metal (Elkem Metals Company, Alloy, West Virginia) and the potential catalytic material was formed by placing the materials in a glass vessel and shaking. The test mixture was added to the reactor and the reactor was purged with nitrogen gas for about 30 minutes. The reactor temperature, for each run, was maintained at the temperature specified in Tables 1 and 2. Hydrogen Chloride was fed to the reactor a rate of 8-10 g/h for a period of about 20 hours. Products were collected continuously throughout the 20-hour run, in a cold trap. The collected product was analyzed by gas liquid chromatography to determine the amounts and types of silanes produced. The weight difference of the reactor before and after each run was used as an indication of silicon conversion.

Materials tested as unsupported catalysts and their concentrations in the ground silicon metal are listed in Table 1. The sources of materials tested as catalysts, as indicated in Table 1, are: Aldrich Chemical Company, Milwaukee, WI; ALFA Research Chemicals, Danvers, MA; and Belmont Metals, Inc., Brooklyn, NY. Unless indicated otherwise, under the heading "Type," all materials were tested as powders in the form received. Screened particle size of the tested material is provided in parenthesis, when screening was conducted.

The results of this series of runs are presented in Table 1 under the heading "Product." Under the subheadings "$HSiCl_3$" and "$SiCl_4$" are listed the weight percent of these two products in relation to total recovered products. Under the heading "Si-Conv" is presented the percent of silicon metal consumed during the process as determined by the reduction in weight of silicon initially added to the reactor. The heading "P.I." is a performance index calculated as the "$SiCl_4$" value multiplied by the "Si- Conv"/100 value. The first line of data represents a baseline for a process in which no catalyst was present. The values presented for the baseline are the averaged values of four separate runs. All other values in Table 1 are the averaged values for two separate runs.

Table 1

| Effect of Metal and Metal Compounds as Catalyst For Tetrachlorosilane Production | | | | | | | |
|---|---|---|---|---|---|---|---|
| Catalyst | | | Temp. (°C) | Product | | | |
| Type | Source | Conc.* (ppm) | | $HSiCl_3$ | $SiCl_4$ | Si-Conv | P.I. |
| None | - | - | 315 | 87.1 | 12.0 | 93.0 | 11 |
| Sn | Belmont | 250 | 315 | 67.7 | 26.2 | 96.0 | 25 |
| Sn | Belmont | 500 | 315 | 62.7 | 35.9 | 91.1 | 33 |
| Sn | Belmont | 1000 | 315 | 62.6 | 35.7 | 95.3 | 34 |
| Sn | Belmont | 2000 | 315 | 49.4 | 50.2 | 91.1 | 46 |
| Sn | Belmont | 4000 | 315 | 58.8 | 41.1 | 95.8 | 39 |
| Sn | Belmont | 4000 | 350 | 55.2 | 41.5 | 87.4 | 36 |
| Sn (-325 mesh) | Aldrich | 500 | 315 | 66.3 | 30.3 | 84.6 | 26 |
| Sn (-100 mesh) | Aldrich | 1000 | 315 | 70.7 | 28.3 | 75.4 | 21 |
| Sn(IV)Cl | Aldrich | 1000 | 315 | 61.6 | 38.1 | 90.8 | 35 |
| $SnCl_4 \cdot 5H_2O$ | Alfa | 1000 | 315 | 48.2 | 51.1 | 66.0 | 34 |
| Sn(II) Oxide | Aldrich | 1000 | 315 | 66.6 | 32.4 | 83.2 | 27 |
| Sn(IV) Oxide | Aldrich | 1000 | 315 | 63.2 | 34.7 | 74.7 | 26 |
| Ni($2\mu$) | Aldrich | 2000 | 315 | 63.6 | 29.9 | 91.9 | 27 |
| Ni | Alfa | 4000 | 315 | 76.6 | 20.7 | 82.3 | 17 |
| As | Alfa | 500 | 315 | 73.8 | 25.4 | 93.9 | 24 |
| As | Alfa | 2000 | 315 | 78.1 | 20.2 | 86.3 | 17 |
| Pd | Aldrich | 500 | 315 | 86.9 | 11.9 | 93.2 | 11 |
| Pd | Aldrich | 1000 | 315 | 69.8 | 27.8 | 84.6 | 24 |
| Pd | Aldrich | 2000 | 315 | 73.1 | 25.8 | 90.6 | 23 |

*Concentrations are expressed as ppm of catalytic metal.

Materials tested as supported catalysts, their supports and the initial concentration of metal or metal compound present in relation to total solids charged to the reactor are presented in Table 2. The sources of materials tested, as indicated in Table 2, are: Alfa Research Chemicals, Danvers, MA; Calgon Corporation, Pittsburgh, PA; Dow Corning Corporation (DC), Midland, MI; Degussa Corporation, S. Plainfield, NJ; Engelhard Corporation, Edison, NJ; and United Catalyst Inc. (UCI), Louisville, KY. The support materials tested are labelled in Table 2 as: activated carbon (Act. C), alumina, Silica-alumina (Si-Al), graphite and diatomaceous earth (d-earth).

The results of this series of runs is presented in Table 2 under the heading "Product." Under the subheadings "$HSiCl_3$" and "$SiCl_4$" are listed the weight percent of these two products in relation to total recovered products. Under the heading "Si-Conv" is presented the percent of silicon metal consumed during the process as determined by the reduction in weight of silicon initially added to the reactor. The heading "P.I." is a performance index calculated as "SiCl₄" multiplied by "Si-Conv"/100. The first line of data represents a baseline for a process in which no catalyst or support material was present. The values presented for the baseline are the average values of four separate runs. All other values are the average values of two separate runs.

### Table 2

### Effect of Metals on a Solid Support as Catalyst For Tetrachlorosilane Production

| Catalyst | | | | Product | | | |
|---|---|---|---|---|---|---|---|
| Type | Source | Conc.* (ppm) | Temp. (°C) | $HSiCl_3$ | $SiCl_4$ | Si-Conv | P.I. |
| None | - | - | 315 | 87.1 | 12.0 | 93.0 | 11.2 |
| 1%Pd/Act. C | Alfa | 1000 | 315 | 31.1 | 68.5 | 82.5 | 56.5 |
| 5%Pd/Act. C | Alfa | 1000 | 315 | 4.2 | 94.8 | 92.0 | 87.3 |
| 5%Pd/Act. C | Alfa | 500 | 315 | 3.4 | 93.5 | 89.6 | 83.7 |
| 5%Pd/Act. C | Degussa | 250 | 315 | 17.2 | 81.0 | 83.3 | 67.5 |
| 5%Pd/Act. C | Alfa | 250 | 315 | 29.8 | 67.0 | 94.8 | 63.5 |
| 5%Pd/Act. C | Degussa | 100 | 315 | 25.1 | 74.1 | 86.9 | 64.3 |
| 5%Pd/Act. C | Degussa | 100 | 350 | 25.9 | 72.2 | 92.3 | 66.6 |
| 5%Pd/Act. C | Degussa | 100 | 350 | 53.4 | 44.9 | 87.5 | 39.3 |
| 10%Pd/Act. C | Degussa | 50 | 350 | 60.4 | 38.8 | 88.2 | 34.2 |
| 10%Pd/Act. C | Degussa | 100 | 350 | 19.1 | 79.8 | 90.0 | 71.8 |
| 5%Pd/alumina | UCI | 100 | 315 | 43.9 | 55.0 | 87.9 | 48.3 |
| 5%Pd/alumina | Degussa | 100 | 350 | 60.3 | 37.4 | 93.0 | 34.7 |
| 1%Pd/Si-Al | Engelhard | 1000 | 315 | 56.1 | 42.7 | 86.1 | 36.8 |
| 1%Pd/graphite | Engelhard | 2000 | 315 | 23.5 | 75.4 | 70.1 | 52.8 |
| 1%Pd/graphite | Alfa | 500 | 315 | 46.1 | 53.1 | 87.6 | 46.4 |
| 1%Pd/d-earth | Engelhard | 500 | 315 | 60.4 | 37.8 | 82.6 | 31.2 |
| 1%Pd/d-earth | Engelhard | 1000 | 315 | 12.7 | 85.8 | 54.4 | 46.6 |
| 2%Sn/Act. C | Engelhard | 500 | 315 | 69.1 | 29.1 | 91.8 | 26.7 |
| 3%Sn/Act. C | Engelhard | 100 | 315 | 58.6 | 40.5 | 95.1 | 38.5 |
| 5%Sn/Act. C | DC | 1000 | 315 | 70.4 | 28.7 | 90.4 | 25.9 |
| 4%AlCl₂/Act. C | Calgon | 1000 | 315 | 63.1 | 33.1 | 95.5 | 31.6 |
| 10%Ni/graphite | Alfa | 1000 | 315 | 83.0 | 15.0 | 92.4 | 13.9 |
| 10%Ni/graphite | Alfa | 2000 | 315 | 79.7 | 19.4 | 95.5 | 18.5 |
| 10%Ni/graphite | Alfa | 4000 | 315 | 77.5 | 17.7 | 83.5 | 14.8 |
| 10% Graphite | Calgon | - | 315 | 86.4 | 12.9 | 93.3 | 12.0 |
| 1% Act. C | Calgon | - | 315 | 85.2 | 14.0 | 6.5 | 0.9 |
| 9% Act. C | Calgon | - | 315 | 0.0 | 0.0 | 0.0 | 0.0 |
| 2% Act. C | Engelhard | - | 315 | 69.1 | 29.1 | 91.8 | 26.7 |

*Concentrations are expressed as ppm metal.

## Claims

1. A process for preparing silanes of formula $H_nSiCl_{4-n}$, where n is an integer from zero to four, the process comprising contacting silicon with hydrogen chloride in the presence of an effective concentration of a catalyst comprising a metal or metal compound selected from a group consisting of tin and tin compounds, nickel and nickel compounds, arsenic and arsenic compounds, palladium and palladium compounds and mixtures thereof, rhodium and rhodium compounds, platinum and platinum compounds, iridium and iridium compounds and aluminum and aluminum compounds on a solid support at

5

a temperature of 250°C to 500°C.

2. A process for preparing silanes of formula $H_nSiCl_{4-n}$, where n is an integer from zero to four, the process comprising contacting silicon with hydrogen chloride in the presence of an effective concentration of a catalyst selected from a group consisting of tin and tin compounds, nickel and nickel compounds, arsenic and arsenic compounds, palladium and palladium compounds and mixtures thereof at a temperature of 250 to 500°C.

**Patentansprüche**

1. Verfahren zur Herstellung von Silanen der Formel $H_nSiCl_{4-n}$, worin $\underline{n}$ eine ganze Zahl von 0 bis 4 ist, wobei das Verfahren umfaßt, daß man Silizium mit Chlorwasserstoff in Gegenwart einer wirksamen Konzentration eines Katalysators bei einer Temperatur von 250 bis 500°C in Kontakt bringt, der ein Metall oder eine Metallverbindung ausgewählt aus einer Gruppe bestehend aus Zinn und Zinnverbindungen, Nickel und Nickelverbindungen, Arsen und Arsenverbindungen, Palladium und Palladiumverbindungen und Mischungen davon, Rhodium und Rhodiumverbindungen, Platin und Platinverbindungen, Iridium und Iridiumverbindungen und Aluminium und Aluminiumverbindungen auf einem festen Träger umfaßt.

2. Verfahren zur Herstellung von Silanen der Formel $H_nSiCl_{4-n}$, worin $\underline{n}$ eine ganze Zahl von 0 bis 4 ist, wobei das Verfahren umfaßt, daß man Silizium mit Chlorwasserstoff in Gegenwart einer wirksamen Konzentration eines Katalysators bei einer Temperatur von 250 bis 500°C in Kontakt bringt, ausgewählt aus einer Gruppe bestehend aus Zinn und Zinnverbindungen, Nickel und Nickelverbindungen, Arsen und Arsenverbindungen, Palladium und Palladiumverbindungen und Mischungen davon.

**Revendications**

1. Procédé pour préparer des silanes de formule $H_nSiCl_{4-n}$, où n est un entier de zéro à quatre, le procédé comportant la mise en contact de silicium avec du chlorure d'hydrogène en présence d'une concentration efficace d'un catalyseur comprenant un métal ou un composé métallique sélectionné dans un groupe comprenant l'étain et les composés de l'étain, le nickel et les composés du nickel, l'arsenic et les composés de l'arsenic, le palladium et les composés du palladium et des mélanges de ceux-ci, le rhodium et les composés du rhodium, le platine et les composés du platine, l'iridium et les composés de l'iridium et l'aluminium et les composés de l'aluminium sur un support solide à une température de 250°C à 500°C.

2. Procédé pour préparer des silanes de formule $H_nSiCl_{4-n}$, où n est un entier de zéro à quatre, le procédé comportant la mise en contact de silicium avec du chlorure d'hydrogène en présence d'une concentration efficace d'un catalyseur sélectionné dans un groupe comprenant l'étain et les composés de l'étain, le nickel et les composés du nickel, l'arsenic et les composés de l'arsenic, le palladium et les composés du palladium et des mélanges de ceux-ci à une température de 250°C à 500°C.